# EUROPEAN PATENT APPLICATION

(11) **EP 4 819 478 A1**
(43) Date of publication of application: **07.10.2026**
(21) Application number: 24897650.8
(22) Date of filing: 28.11.2024
(51) Int. Cl.: H02M 7/493, H02P 27/06

(54) **POWER CONVERSION APPARATUS AND HEAT PUMP DEVICE**

(30) Priority: 01.12.2023 JP 2023203897
(71) Applicant: Carrier Japan Corporation, Tokyo 141-0032 (JP)
(72) Inventor: KANAMORI, Masaki, Fuji-shi, Shizuoka 416-8521 (JP); NISHIO, Motoki, Fuji-shi, Shizuoka 416-8521 (JP)
(74) Representative: Dehns
(86) International application number: PCT/JP2024/042179
(87) International publication number: WO 2025/115966

(57) **Abstract**

The present invention comprises: a rectification circuit (3) that rectifies an AC voltage supplied from an AC power supply (1); a first capacitor (13) connected on the DC side of the rectification circuit; a first power converter (5) that is connected in parallel to the first capacitor and has respective phase output terminals connected to one-side ends of respective phase windings of a motor (10), the respective phase windings being independent of one another; a second power converter (9) having respective phase output terminals connected to the other-side ends of the respective windings of the motor; a second capacitor (8) connected on the DC side of the second power converter; a reactor (6) connected by branching from wiring that connects the AC power supply and the rectification circuit; a third power converter (7) that is connected between the reactor and the second capacitor and suppresses harmonic waves; a relay (16) inserted between the AC power supply and the third power converter; and a control unit that charges the second capacitor by driving first and second inverters before starting the motor, and that turns on the relay after the charging. The capacitance of the second capacitor is set to be larger than the capacitance of the first capacitor.

## Description

### Technical Field

Embodiments of the present invention relate to a power conversion apparatus that drives a motor having an open-winding structure, and a heat pump device including the power conversion apparatus.

### Background Art

Patent Literature 1 discloses a single-phase input power conversion apparatus equipped with a small-capacitance film capacitor as a power conversion apparatus for driving a motor, and states that harmonics in the input current can be reduced and the power factor can be improved. However, in a three-phase input power conversion apparatus, current flows only from the maximum phase to the minimum phase of the three-phase AC, so that the input current cannot be controlled to have a sinusoidal waveform only by switching in a power converter circuit for driving the motor.

On the other hand, in order to increase the capacity of the device and to achieve higher motor speed, a dual-inverter system is known in which an open-winding motor with independent windings for each phase is driven by two inverters. Even in such a dual-inverter system, a small-capacitance capacitor can be used in the DC section; however, when the system is connected to multiphase AC such as three-phase AC, the input current of the device cannot be controlled to have a sinusoidal waveform.

In response to this, Patent Literature 2 discloses a system in which a matrix converter is applied to a primary side inverter.

### Citation List

### Patent Literature

Patent Literature 1: Japanese Patent No. 4391768
Patent Literature 2: Japanese Patent No. 5531238

### Summary of Invention

### Technical Problem

With the configuration in Patent Literature 2, it is possible to control the three-phase input current to have a sinusoidal waveform, but for the semiconductor device for the matrix converter, the choke coil used in the AC filter, and the like, components with a rating equal to or higher than the rated capacity of the power conversion apparatus must be selected, which results in problems such as an increase in the overall size of the power conversion apparatus and increased costs.

Therefore, there are provided a power conversion apparatus that can suppress an increase in the overall size and cost even in the dual-inverter system, and a heat pump device including the power conversion apparatus.

### Solution to Problem

A power conversion apparatus according to an embodiment includes a rectifier circuit that rectifies an AC voltage supplied from an AC power supply, a first energy storage element connected to a DC side of the rectifier circuit, a first power converter including a diode and a semiconductor switch connected in parallel to the first energy storage element, wherein one end of each phase winding of a first motor, the phase windings being independent of one another, is connected to each phase output terminal, a second power converter including a diode and a semiconductor switch, wherein the other end of the phase winding of the first motor is connected to each phase output terminal, a second energy storage element connected to a DC side of the second power converter, a reactor connected by branching from wiring connecting the AC power supply and the rectifier circuit, and a third power converter that includes a diode and a semiconductor switch connected between the reactor and the second energy storage element, and suppresses harmonics.

In addition, a heat pump device according to an embodiment includes the power conversion apparatus according to the embodiment and the first motor, in which the first motor drives a compressor.

### Brief Description of Drawings

[Figure 1] Figure 1 is a diagram showing a first embodiment, and showing the configuration of a power conversion apparatus.
[Figure 2] Figure 2 is a diagram showing the configuration of an air conditioner.
[Figure 3] Figure 3 is a diagram showing a second embodiment, and showing the configuration of a power conversion apparatus.
[Figure 4] Figure 4 is a flowchart showing a third embodiment, and showing the processing content of a regenerative power absorption operation.
[Figure 5] Figure 5 is a diagram showing the switching state of each inverter when performing the regenerative power absorption operation.
[Figure 6] Figure 6 is a timing chart showing the current and voltage waveforms corresponding to the processing content shown in Figure 5.
[Figure 7] Figure 7 is a diagram showing a fourth embodiment, and showing the switching state of each inverter when performing the regenerative power absorption operation.
[Figure 8] Figure 8 is diagram showing a fifth embodiment, and showing the configuration of a power conversion apparatus.
[Figure 9] Figure 9 is diagram showing a sixth embodiment, and showing the configuration of a power conversion apparatus.
[Figure 10] Figure 10 is diagram showing a seventh embodiment, and showing the configuration of a power conversion apparatus.
[Figure 11] Figure 11 is diagram showing an eighth embodiment, and showing the configuration of a power conversion apparatus.
[Figure 12] Figure 12 is a diagram showing a configuration example of a noise filter circuit.

### Description of Embodiments

### (First Embodiment)

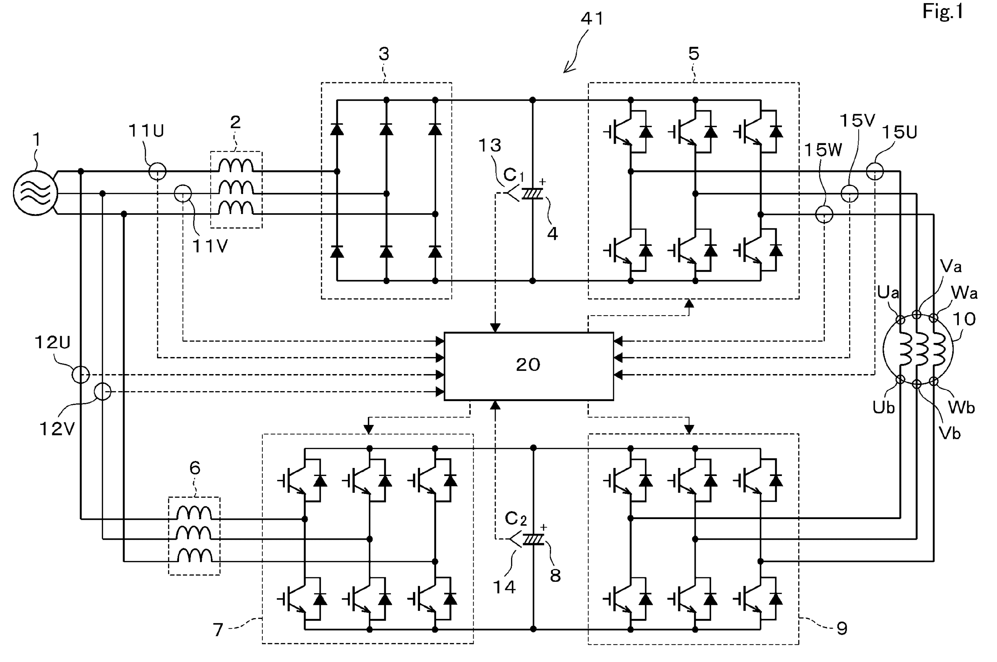

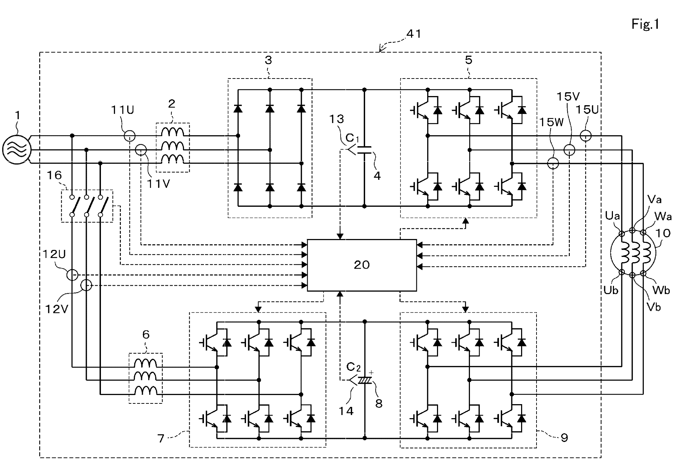

As shown in Figure 1, the power conversion apparatus of the present embodiment drives a first motor 10 as a drive target. The first motor 10 is assumed to be a three-phase permanent magnet synchronous motor or an induction machine or the like, but in the present embodiment, it is a permanent magnet synchronous motor. The first motor 10 is a so-called open-winding motor, and has three-phase windings which are not connected to each other, with both terminals thereof being in an open state. In other words, the first motor 10 includes six winding terminals Ua, Va, Wa, Ub, Vb, Wb.

The first motor 10 is driven by a dual-inverter system using a first inverter 5 and a second inverter 9. The first inverter 5 and the second inverter 9 are three-phase inverters having the same circuit configuration, each including three pairs of switching elements connected in series, with intermediate connection points between the switching elements connected in series serving as three output terminals. The phase output terminals of the first inverter 5 are connected to the winding terminals Ua, Va, Wa of the first motor 10, respectively, and the phase output terminals of the second inverter 9 are connected to the winding terminals Ub, Vb, Wb of the first motor 10, respectively.

A rectifier circuit 3 is connected to a three-phase AC power supply 1 via a three-phase reactor 2. The rectifier circuit 3 is configured through three-phase bridge connection of six diodes. A first capacitor 4, which is an electrolytic capacitor, and the first inverter 5 are connected to the output terminals of the rectifier circuit 3.

A second capacitor 8, which is, for example, an electrolytic capacitor, and DC-side terminals of a power converter 7 are connected in parallel to the second inverter 9. This second capacitor 8 and the first capacitor 4 may each be any chargeable and dischargeable energy storage element having a certain capacitance, and for the element, a storage battery or a battery and the like may be used instead of the capacitor. In other words, the first capacitor 4 corresponds to a first energy storage element, and the second capacitor 8 corresponds to a second energy storage element. The high-voltage side terminal and the low-voltage side terminal of the first inverter 5, that is, the two ends of the first capacitor 4, are not connected to the second inverter 9, and the second inverter 9 is independent. In other words, the output terminals of the first inverter 5 and the second inverter 9 are connected to each other only through the independent phase windings of the first motor 10.

The power converter 7, whose DC section is connected to the second capacitor 8, has the same circuit configuration as the first inverter 5 and the second inverter 9, and is a three-phase inverter including three pairs of switching elements connected in series, with intermediate connection points between the switching elements connected in series serving as three output terminals. Each phase output terminal of the power converter 7 is connected to a three-phase AC power supply 1 through a three-phase reactor 6. The switching elements constituting the first inverter 5, the second inverter 9, and the power converter 7 are each connected in parallel with a flywheel diode. Each of these is configured through three-phase bridge connection of semiconductor switching elements such as IGBTs, for example, and corresponds to the first to third power converters, respectively.

Current sensors 11U, 11V are arranged in the U and V phases of the power line connecting the three-phase AC power supply 1 and the three-phase reactor 2. The W-phase current is calculated through computing from the U- and V-phase currents detected by these current sensors 11U, 11V. In addition, current sensors 12U, 12V are arranged in the U and V phases of the power line connecting the three-phase AC power supply 1 and the three-phase reactor 6. The W-phase current flowing through the three-phase reactor 6 is calculated through computing from the U- and V-phase currents flowing through the three-phase reactor 6 detected by these current sensors 12U, 12V.

Voltage sensors 13, 14 detect the terminal voltages of the first capacitor 4 and the second capacitor 8, respectively. Current sensors 15U, 15V, 15W are arranged between the phase output terminals of the first inverter 5 and the winding terminals Ua, Va, Wa of the first motor 10 to detect the current flowing in each motor winding of the first motor 10.

Since the DC sections of the first inverter 5 and the second inverter 9 are both connected to the same three-phase AC power supply 1, when the first motor 10 is driven by the dual-inverter system using both the first inverter 5 and the second inverter 9, a zero-phase current flowing in the same direction at a predetermined period through each phase winding is generated. For this reason, the current sensors 15U, 15V, 15W are provided in a manner corresponding to the respective phase windings so that the zero-phase current and the current flowing through each motor winding can be detected separately.

The detection signals output by each of the above sensors 11 to 15 are input to a control unit 20. The control unit 20 is configured by a microcomputer or the like, and controls the switching of each IGBT constituting the first inverter 5, the second inverter 9, and the power converter 7 based on the detection signals of each of the sensors 11 to 15. In the above configuration, the components except the first motor 10 form a power conversion apparatus 41.

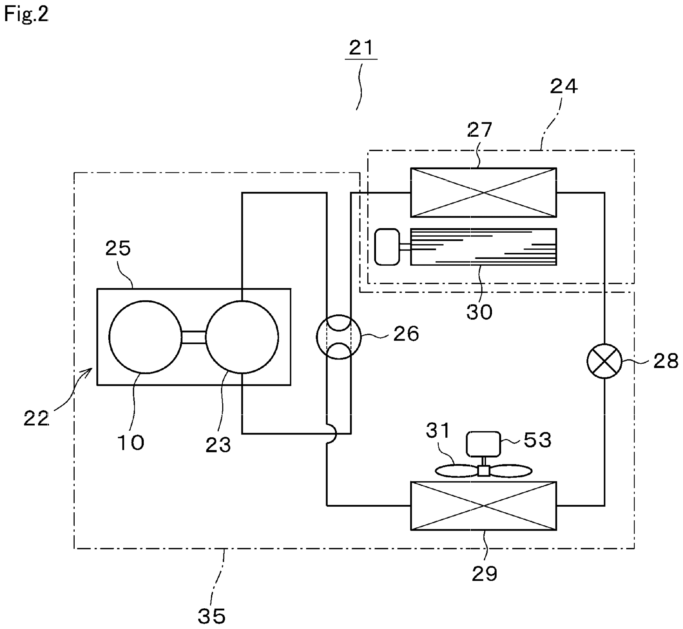

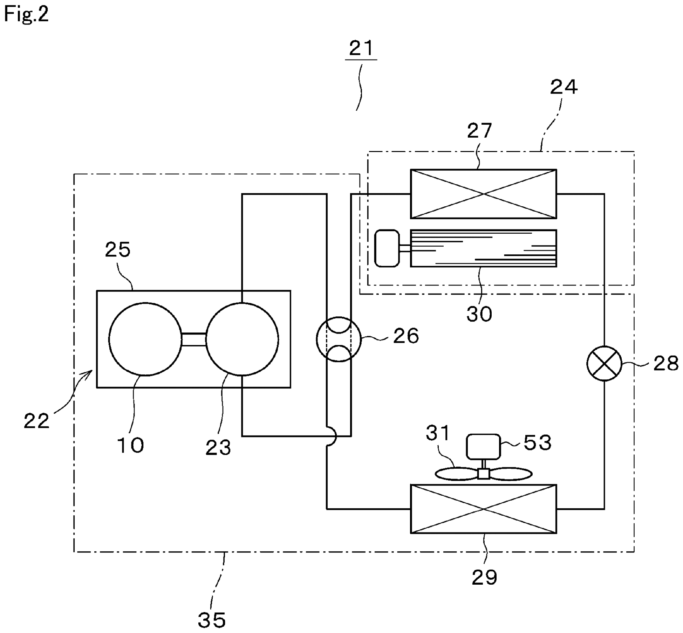

Figure 2 shows the configuration of an air conditioner, which is a heat pump device to which the power conversion apparatus 41 is applied. Note that heat pump devices to which the power conversion apparatus 41 is applied include, in addition to the air conditioner, hot water generating devices such as hot water heaters and cold and hot water generating devices such as chillers. An air conditioner 21 includes an indoor unit 24, an outdoor unit 35, refrigerant piping and signal communication lines that connect them to each other. The indoor unit 24, which is installed indoors, houses an interior side heat exchanger 27 and an indoor fan 30 inside. On the other hand, the outdoor unit 35 is placed outdoors and houses devices such as a control unit 20, a compressor 22, an exterior side heat exchanger 29, a four-way valve 26, a decompression device 28, an outdoor fan 31, and an outdoor fan motor 53.

The compressor 22 is configured to house a compression section 23 and the first motor 10 in the same iron sealed container 25, and a rotor shaft of the first motor 10 is linked to the compression section 23. The compressor 22, the four-way valve 26, the interior side heat exchanger 27, the decompression device 28, and the exterior side heat exchanger 29 are connected such that a closed loop is formed of a pipe that serves as a refrigerant passage. Note that while the compressor 22 is a one-cylinder rotary compressor, for example, it may be, without limiting thereto, a multi-cylinder rotary compressor, a scroll-type compressor, or a reciprocating compressor.

In heating, the four-way valve 26 is in the state shown by the solid line, and the high-temperature refrigerant compressed in the compression section 23 of the compressor 22 is supplied from the four-way valve 26 to the interior side heat exchanger 27, condenses and releases heat indoors to heat the indoor environment. The refrigerant is then decompressed by the decompression device 28 to have a low temperature, which then flows to the exterior side heat exchanger 29 and absorbs heat from the outside air so that it evaporates and returns to the compressor 22.

In cooling, on the other hand, the four-way valve 26 is switched to the state shown by the broken line. Therefore, the high-temperature refrigerant compressed in the compression section 23 of the compressor 22 is supplied from the four-way valve 26 to the exterior side heat exchanger 29, radiates heat outdoors and condenses. The refrigerant is then decompressed by the decompression device 28 to have a low temperature, which then flows to the interior side heat exchanger 27 and absorbs heat from the indoor air so that it evaporates, cools the indoor environment, and returns to the compressor 22. Then, it is configured such that air is sent to the indoor side and exterior side heat exchangers 27, 29 by the indoor fan 30 and the outdoor fan 31, respectively, and with the sent air, efficient heat exchange is performed between the heat exchangers 27, 29 and the indoor air and the outdoor air, respectively.

Next, the operation of the present embodiment will be described. The control unit 20 operates/stops the compressor 22, that is, the first motor 10, based on an instruction from an indoor control unit (not shown) on the indoor unit 24 side, for example. During the operation of the compressor 22, the control unit 20 performs vector calculation using the current values detected by the current sensors 15U, 15V, 15W, and the terminal voltages of the first capacitor 4 and the second capacitor 8 detected by the voltage sensors 13, 14. Based on the calculation results, the control unit 20 operates the switching elements of the first inverter 5 and the second inverter 9 in a coordinated manner, and causes a desired current to flow through each winding of the first motor 10 to perform variable speed driving of the first motor 10.

Furthermore, during the operation of the first motor 10, the control unit 20 simultaneously operates the power converter 7 as an active filter circuit to suppress and reduce harmonics flowing through the power line. Specifically, the control unit 20 extracts harmonic currents from the currents flowing through the phases of the reactor 2 detected by the current sensors 11U, 11V, and controls the operation of each switching element of the power converter 7 so that the reactor currents of the phases detected by the current sensors 12U, 12V become compensation currents that cancel out the harmonic currents flowing through the U, V, W phases, taking into account the terminal voltage of the second capacitor 8. Note that the second capacitor 8, which is the second energy storage element, has a certain capacitance because it is used as a power source for the compensation current output by the active filter circuit.

Configuring the power conversion apparatus 41 as described above improves the controllability of the motor using a dual inverter consisting of the first inverter 5 and the second inverter 9 and the first motor 10 having an open-winding configuration. In other words, since voltage is applied to the windings of the first motor 10 by the two inverters 5 and 9, the operating range of the first motor 10 can be expanded. In addition, since the voltage applied to the windings of the first motor 10 is multi-level, the iron loss generated in the first motor 10 can be reduced.

Furthermore, by devising the drive method for the two inverters 5 and 9 via the control unit 20, it is possible to control the power applied to the first motor 10 to remain constant or to expand the operating range in the high-speed region through reactive power injection. In addition, by connecting the negative side of the DC section of the power converter 7 and the negative side of the DC section of the second inverter 9, the reference voltages of these circuits become common. This makes it possible to reduce the number of isolation points in the drive power supply, and to prevent circuit enlargement and cost increases. In addition, by operating the power converter 7 as an active filter circuit that performs switching control so as to cancel out the harmonic current flowing from the rectifier circuit 3 to the three-phase AC power supply 1 side during the operation of the first motor 10, it is possible to suppress the power source harmonics, and make the input current from the three-phase AC power supply 1 to the power conversion apparatus 41 closer to a sinusoidal waveform.

### (Second Embodiment)

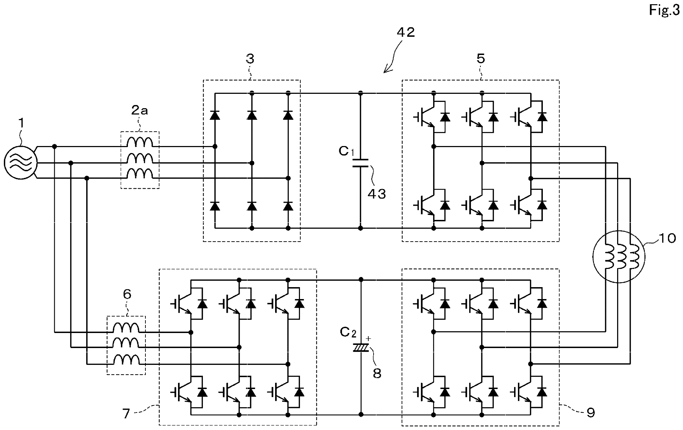

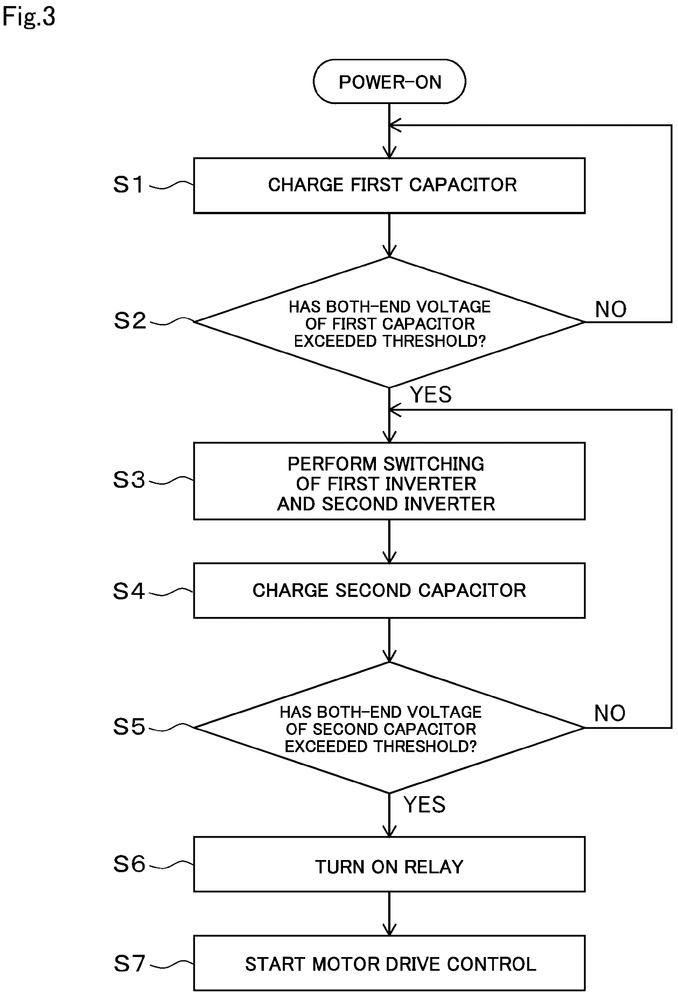

In the following, the same parts as those in the first embodiment are denoted by the same reference numerals, and the description thereof is omitted, and the different parts are described. In a power conversion apparatus 42 of the second embodiment shown in Figure 3, a first capacitor 43 having a small capacitance is used instead of the first capacitor 4 of the power conversion apparatus 41. Accordingly, the capacitance of the second capacitor 8 is set to be larger than the capacitance of the first capacitor 43. Note that in the drawings of the power conversion apparatus of each embodiment shown below, the illustration of the sensors 11 to 15 and the control unit 20 are omitted. Further, the operation control of each part by the control unit 20 in the power conversion apparatus of each embodiment is the same as that of the first embodiment.

Here, a film capacitor is used for the first capacitor 43, and an electrolytic capacitor is used for the second capacitor 8 having a large capacitance. This can reduce the number of electrolytic capacitors used. Using a film capacitor, which is less susceptible to deterioration over time as an individual element, for the first capacitor 43 can extend the life of the power conversion apparatus 42. The first capacitor 43 only needs to have a capacitance that is sufficient to cut high-frequency components generated by switching between the first inverter 5 and the second inverter 9, and that the current that charges the first capacitor 43 when the power is turned on does not exceed the capacitance of the diodes that form the rectifier circuit 3. This capacitance is typically around several tens of µF. This allows the three-phase reactor 2 to be made smaller in size.

On the other hand, the capacitance of the second capacitor 8 may be determined based on the compensation capacitance of the power converter 7, the output power of the second inverter 9, the ripple current flowing into the second capacitor 8, and the like. This capacitance is typically around several thousand µF. Note that the first capacitor 43 and the second capacitor 8 may each be any chargeable and dischargeable energy storage element, and a storage battery or a battery and the like may be used instead of the electrolytic capacitor.

If the first capacitor 43 and the second capacitor 8 are considered as energy storage elements including also a storage battery, the maximum amount of energy that can be stored in the second capacitor 8, which is the second energy storage element, is set to be greater than the maximum amount of energy that can be stored in the first capacitor 43, which is the first energy storage element. Note that when capacitors are used for the first and second energy storage elements, the maximum amount of energy of each element corresponds to the capacitance.

### (Third Embodiment)

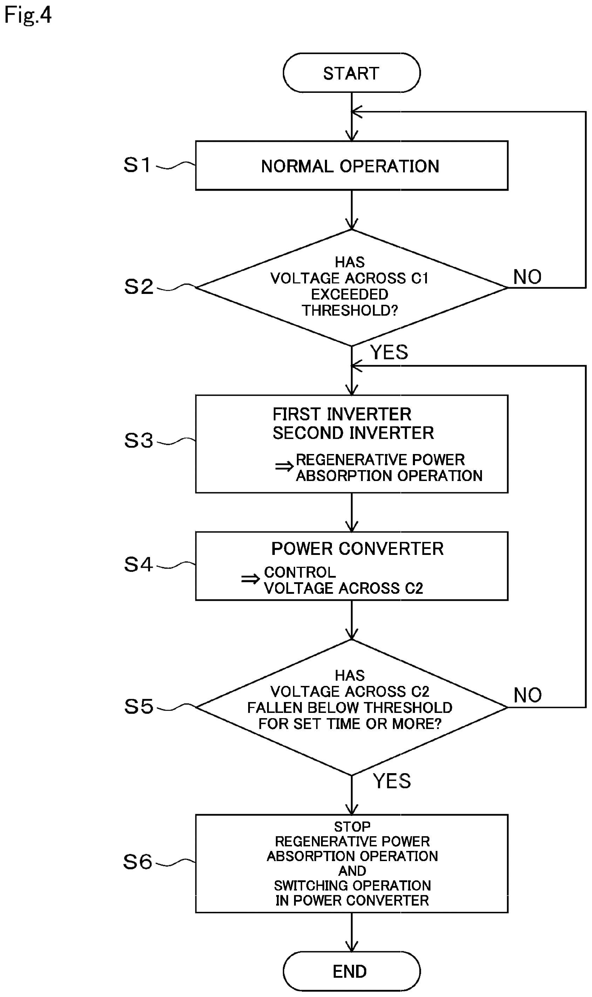

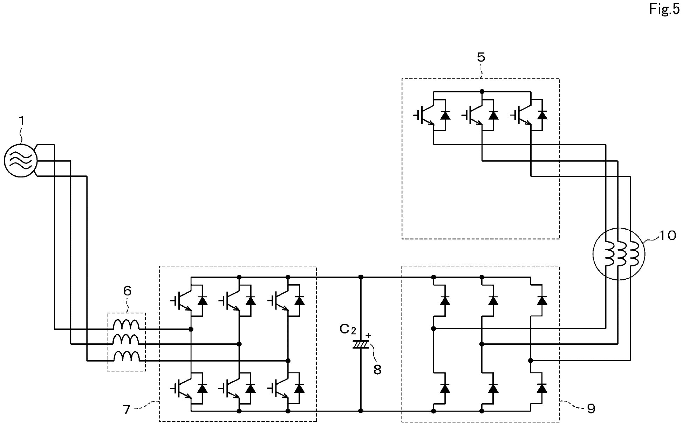

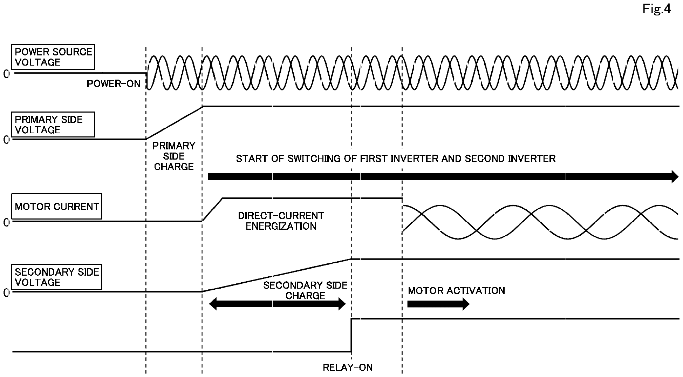

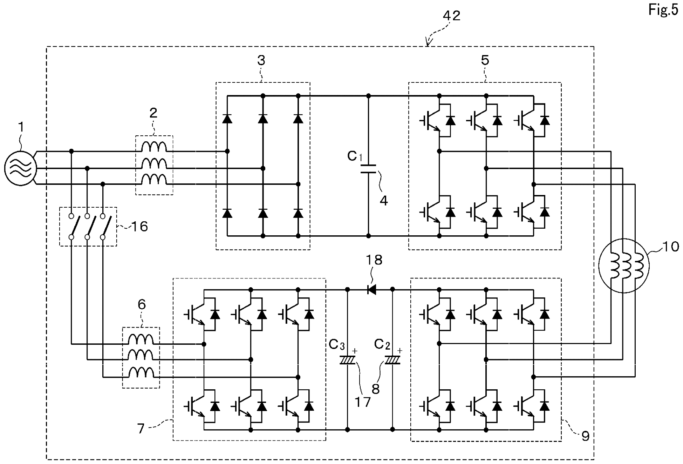

In the third embodiment, the first capacitor 43 having a small capacitance such as a film capacitor is used in the power conversion apparatus 42 as in the second embodiment. This is an example including a regenerative power absorption operation for preventing overvoltage failure of the first capacitor 43, the first inverter 5, and the rectifier circuit 3 due to regenerative power generated in the first motor 10. Figure 4 shows an operation flow during such regenerative power absorption, and in order to simplify the drawing, the first capacitor 43 is represented by the abbreviation C1 and the second capacitor 8 is represented by the abbreviation C2. Figure 5 shows only the elements that are energized in the first inverter 5 and the second inverter 9 when performing a regenerative power absorption operation.

During normal operation (S1), as described above, the control unit 20 drives the first motor 10 using the first inverter 5 and the second inverter 9, and performs an active filter circuit operation using the power converter 7. During this normal operation, if a sudden deceleration of the first motor 10 or a stop of the output from the first inverter 5 and the second inverter 9 occurs, regenerative power is generated from the windings of the first motor 10, and this power flows as regenerative current into the first capacitor 43. This causes the voltage across the first capacitor 43 to rise abnormally.

Thus, the control unit 20 detects the voltage rise of the first capacitor 43 by the voltage sensor 13. Then, when the voltage across the first capacitor 43 exceeds a predetermined threshold (S2; YES), the control unit 20 determines that power regeneration by the first motor 10 has occurred, and performs a regenerative power absorption operation using the second capacitor 8 shown in Figure 5 (S3). This prevents the regenerative current that would conventionally flow into the first capacitor 43 from flowing to the second capacitor 8 side, thereby preventing the voltage across the first capacitor 43 from abnormally rising above the rated values of each element and preventing damage.

At this time, the control unit 20 controls the switching of the power converter 7 to control the voltage across C2; the second capacitor 8 (S4). That is, the control unit 20 controls the switching operation of the power converter 7 in a direction to reduce the voltage across the second capacitor 8, and regenerates power to the three-phase AC power supply 1 side. Then, while the voltage across the second capacitor 8 does not fall below the threshold for a set time or more (S5; NO), the control unit 20 returns to step S3 and continues the regenerative power absorption operation described above. After that, when the voltage across the second capacitor 8 falls below the threshold for a set time or more (S5; YES), the control unit 20 stops the regenerative power absorption operation and the switching control in the power converter 7 (S6).

Note that, if the voltage across the second capacitor 8, which rises due to the regenerative power absorption operation to the second capacitor 8 in step S3, is within the rated voltage range of the second capacitor 8, the second inverter 9, and the power converter 7, the voltage suppression operation of the second capacitor 8 by the power converter 7 in step S4 may be omitted. In this case, the switching control in the power converter 7 is stopped, that is, all switching elements are turned off.

In the regenerative power absorption operation in step S3, the neutral point of the first motor 10 is formed by turning on all the IGBTs on the upper arm side and turning off all the IGBTs on the lower arm side in the first inverter 5. At this time, no power flows from the first motor 10 to the first capacitor 4. Meanwhile, the second inverter 9 is made equivalent to the configuration of the rectifier circuit 3 by turning off all the IGBTs. This allows regenerative current to flow from the first motor 10 to the second capacitor 8. In this way, by performing the regenerative power absorption operation during power regeneration by the first motor 10, it is possible to absorb regenerative power only by the second capacitor 8, which has a relatively large capacitance, thereby preventing abnormal voltage rise of the first capacitor 43. Furthermore, by setting the capacitance of the second capacitor 8 to around several thousand µF, it is possible to prevent the second capacitor 8 from reaching an overvoltage even during power regeneration.

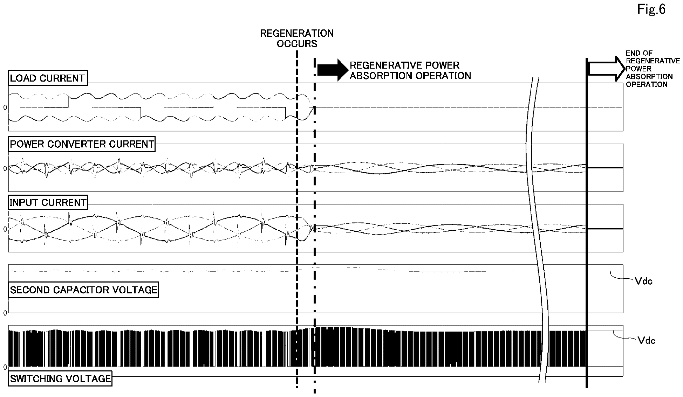

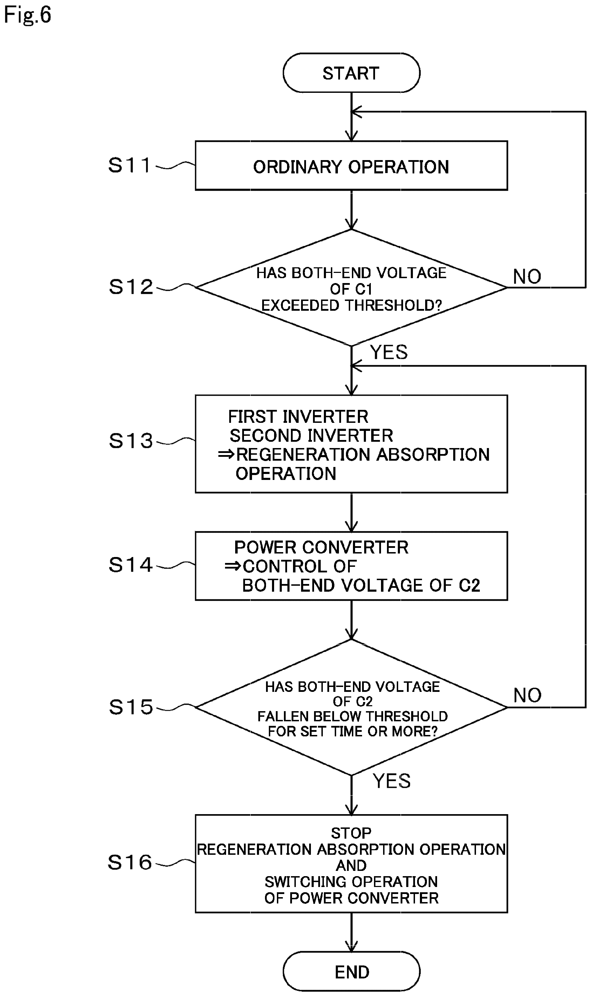

Figure 6 shows the current and voltage waveforms at each part when executing the flow shown in Figure 4. Note that the current waveforms are three phases; however, their waveforms are not shown separately because there is no need to distinguish between the three phases here. The "load current" in the figure is the current that passes through the three-phase reactor 2, and the "input current" is the current input from the three-phase AC power supply 1 to the three-phase reactors 2 and 6. The "power converter current" is the current flowing through the three-phase reactor 6. The "capacitor voltage" is the voltage across the second capacitor 8, and the "switching voltage" is the collector-emitter voltage of the IGBTs constituting the power converter 7.

Until the regenerative operation starts, a predetermined load current is flowing by driving the first motor 10. At the same time, the power converter 7 performs switching through an active filter circuit operation to make the input current sinusoidal. Subsequently, if it is determined that regenerative power has been generated in step S2, the regenerative power absorption operation by the first inverter 5 and the second inverter 9 is performed.

At that time, the driving of the first motor 10 stops, so the load current decreases. At the same time, as a regenerative power absorption operation, the power converter 7 performs switching in a direction that reduces the voltage across the second capacitor 8 instead of the active filter circuit operation, and causes a sinusoidal current to flow instead of the compensation current. As a result, the input current is only the sinusoidal current due to the operation of the power converter 7.

Then, if the determination in step S5 is "YES", the regenerative power absorption operation ends, and thereafter, all switching operations of the first inverter 5, the second inverter 9, and the power converter 7 stop, and all of the load current, active filter current, and input current become "0". The voltage of the second capacitor 8 stabilizes at the DC voltage Vdc, which is the voltage obtained by full-wave rectification of the AC power supply. Then, the switching voltage in Figure 6 becomes the DC voltage Vdc, which is the voltage of the second capacitor 8, because the switching elements of the power converter 7, that is, the IGBTs, are turned off.

In addition, the determination of "YES" may be made in step S5 when the voltage of the second capacitor 8 shown in Figure 6 becomes stable. Therefore, the threshold in step S5 does not necessarily have to be set to the same value as the threshold in step S2. Note that since the first motor 10 is used to drive the compressor 22, which requires a large torque to drive, the period during which regenerative power is generated is extremely short. For this reason, instead of step S5, it may be simply determined that the duration from the start of the regenerative power absorption operation has exceeded a predetermined time, and the process may proceed to step S6, where the regenerative power absorption operation ends.

In step S2, the generation of regenerative power is determined by the voltage rise of the first capacitor 43. Instead of this, various cases in which the generation of regenerative power is expected, such as when the first motor 10 is suddenly stopped from a high rotation speed, may be incorporated as conditions in advance, and the regenerative power absorption operation in steps S3 and S4 may be started when such an event occurs. In addition, by performing the voltage suppression operation of the second capacitor 8 by the power converter 7 in step S4, the capacitance of the second capacitor 8 can be made smaller than the above-mentioned value to make the device smaller in size. In this case, it is possible to use a film capacitor also for the second capacitor 8.

### (Fourth Embodiment)

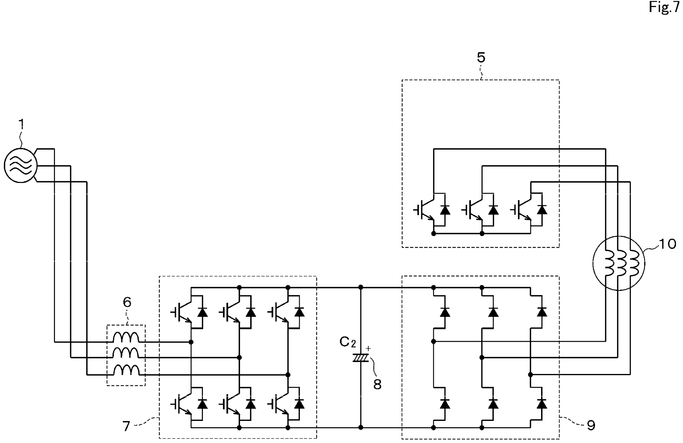

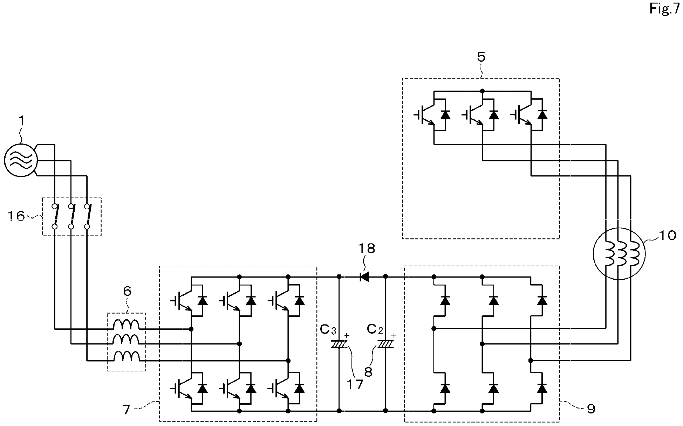

The fourth embodiment also shows an example of the regenerative power absorption operation in the power conversion apparatus 42. In the present embodiment, only the operation of the elements of the first inverter 5 in the regenerative power absorption operation in step S3 of the third embodiment is different, and the rest is the same as the third embodiment. As in Figure 5, Figure 7 shows only the elements that are energized in the first inverter 5 and the second inverter 9 when performing the regenerative power absorption operation. The difference between this fourth embodiment and the third embodiment is that in the first inverter 5, all the IGBTs on the upper arm side are turned off, and all the IGBTs on the lower arm side are turned on. In this case, since the IGBTs on the lower arm side are turned on for a long time, this is effective when the drive power supply for all the switching elements on the lower arm side of the second inverter 9 is configured by a single bootstrap circuit.

### (Fifth Embodiment)

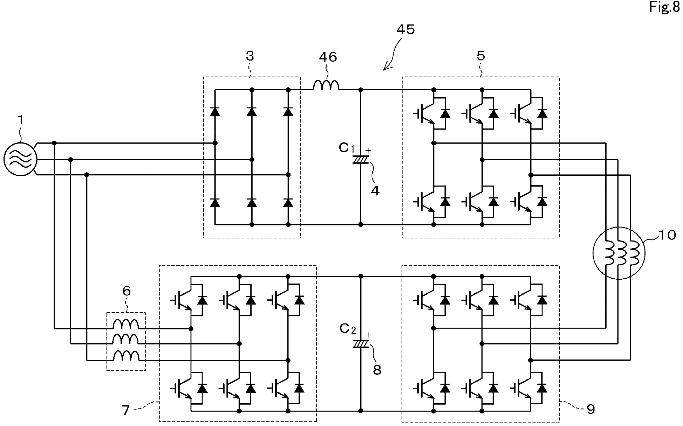

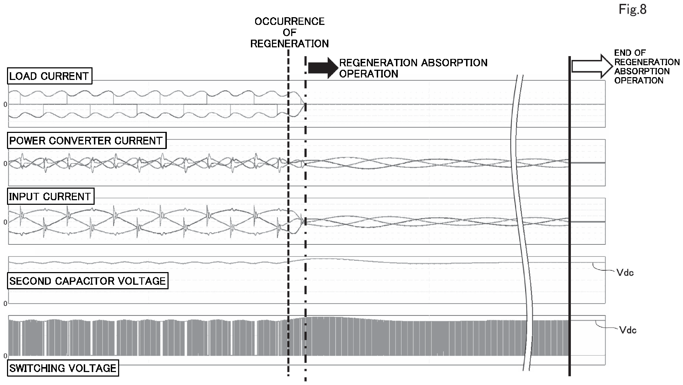

A power conversion apparatus 45 of the fifth embodiment shown in Figure 8 has a configuration in which the three-phase reactor 2 is removed from the power conversion apparatus 41, 42 of the first or second embodiment, and a reactor 46 is inserted between the rectifier circuit 3 and the first capacitor 8 on the positive side. By inserting the reactor 46 in the DC section in this way, the number of reactors used can be reduced compared to the case where the reactor is inserted in the alternating-current section. Note that, instead of the reactor 46 on the positive side, a reactor may be inserted only on the negative side between the rectifier circuit 3 and the first capacitor 8.

### (Sixth Embodiment)

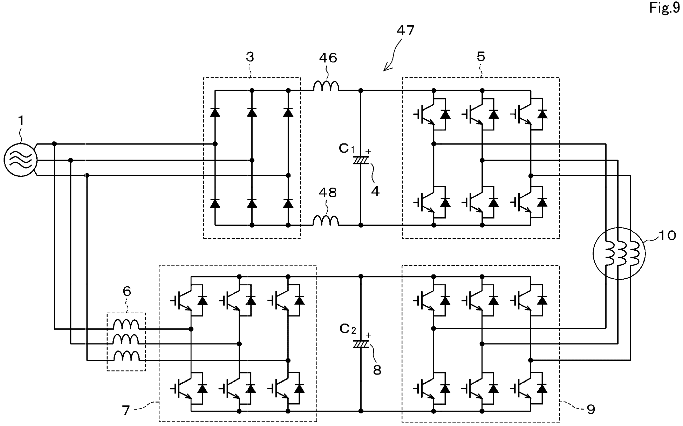

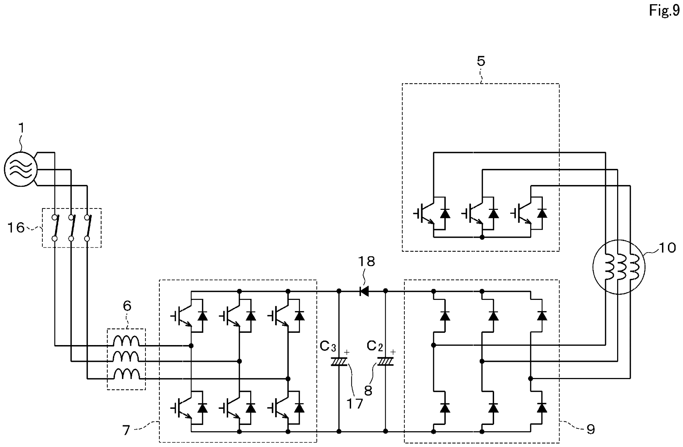

A power conversion apparatus 47 of the sixth embodiment shown in Figure 9 has a configuration in which, in addition to the configuration of the power conversion apparatus 45, a reactor 48 is also inserted to the negative side between the rectifier circuit 3 and the first capacitor 8. By inserting the reactors 46, 48 to both the positive and negative sides in this way, it is possible to reduce the zero-phase current generated when the first motor 10 having an open-winding configuration is driven by the first inverter 5 and the second inverter 9. Note that in this circuit, the inductance values of the reactors 46, 48 can be reduced to approximately half compared to the fifth embodiment.

### (Seventh Embodiment)

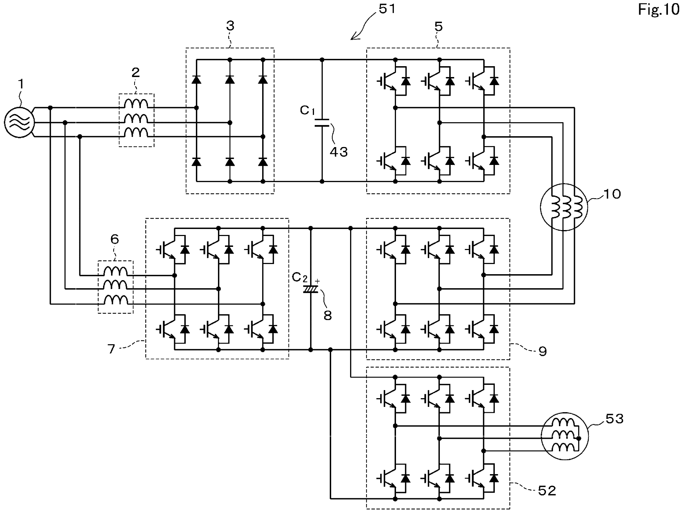

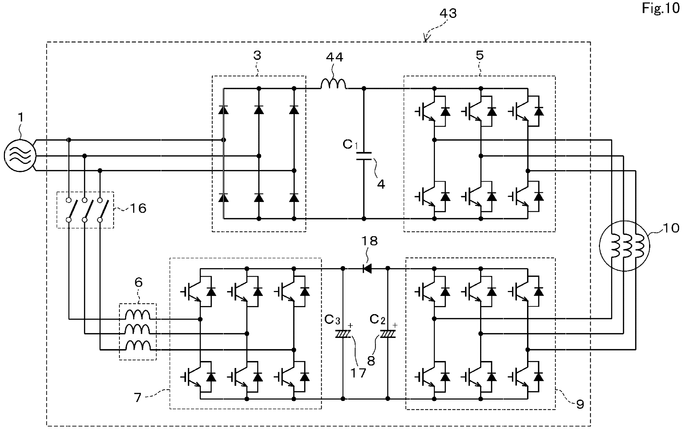

A power conversion apparatus 51 of the seventh embodiment shown in Figure 10 has a configuration in which a fourth inverter 52 corresponding to a fourth power converter is connected in parallel with the second inverter 9 in the power conversion apparatus 42 of the second embodiment shown in Figure 3. That is, the fourth inverter 52 is connected in parallel with the second inverter 9 with respect to the second capacitor 8. This fourth inverter also has the same circuit configuration as the first and second inverters 5, 9 and the power converter 7, and is a three-phase inverter including three pairs of switching elements connected in series, with intermediate connection points between the switching elements connected in series serving as three output terminals, and the switching elements are each provided with a flywheel diode in anti-parallel connection. The fourth inverter 52 drives a second motor 53 consisting of a DC brushless three-phase motor as a drive target. For example, the second motor 53 is a fan motor that drives the fan 31 of the outdoor unit 35 in the air conditioner 21 shown in Figure 2.

If the energy generated when the first motor 10 regenerates power is large, the DC voltage applied to the first inverter 5 rises, which may cause overvoltage breakdown of the first capacitor 43. Therefore, in general, a brake circuit using a semiconductor switch and a large power resistor, or a series circuit of a diode and a large-capacitance capacitor, is connected in parallel to the DC section. In this case, the increase in size and cost due to these additional components is unavoidable.

On the other hand, if the capacitance of the first capacitor 43 is made small as in the second embodiment, the above-described DC voltage fluctuates greatly due to the AC voltage fluctuation of the three-phase AC power supply 1. If the AC power supply is single-phase, the voltage becomes zero once every half cycle of the AC power supply. Even in the three-phase AC power supply 1, the voltage pulsates at a frequency six times the AC power supply frequency, and drops to √(3/2) times the peak voltage every six cycles of the AC power supply. When an inverter circuit using such a pulsating DC voltage is driven, the output power of the inverter and the output power of the motor pulsate, which becomes a factor in vibration and noise deterioration. In the case of the first motor 10 that drives the compression section 23, this first motor 10 is housed in a heavy iron sealed container 25, and since rotational vibration also occurs in the compression section 23 itself, vibration and noise countermeasures are implemented, so this does not pose a significant problem. However, in applications where the motor is used, such as a light-load fan motor, it may have a serious effect and must be avoided.

Therefore, the second motor 53, for which it is desirable to apply a stable DC voltage, is driven by the fourth inverter 52 using the second capacitor 8 as a DC power supply. The capacitance of the second capacitor 8 does not affect the harmonics flowing to the three-phase AC power supply 1 side, so there is no drawback in increasing it. Therefore, by increasing the capacitance of the second capacitor 8, a stable DC voltage can be obtained, and it becomes possible to drive the second motor 53, which is sensitive to vibration and noise as described above. In addition, by setting the capacitance of the second capacitor 8 to an appropriate capacitance that can absorb both the regenerative energy of the first motor 10 and the regenerative energy of the second motor 53, it becomes unnecessary to add a new circuit to absorb the regenerative power as described above.

According to the seventh embodiment configured as above, the capacitance of the first capacitor 43 is made small and the reactor 2 is made smaller in size, and while achieving higher capacity and higher-speed driving of the first motor 10, the regenerative energy can be absorbed by the second capacitor 8. The second motor 53 can be driven by the second capacitor 8 that provides a stable DC voltage.

### (Eighth Embodiment)

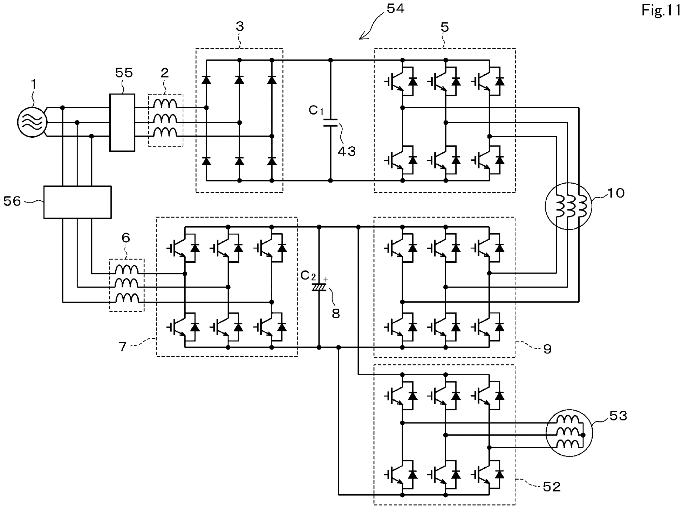

A power conversion apparatus 54 of the eighth embodiment shown in Figure 11 has a configuration in which a first noise filter circuit 55 is inserted between the three-phase AC power supply 1 and the rectifier circuit 2 and a second noise filter circuit 56 is inserted between the three-phase AC power supply 1 and the power converter in the power conversion apparatus 51 shown in Figure 10. In general, when an open-winding motor is driven by a dual-inverter system, it is known that common mode noise flows to ground from both the first inverter 5 and the second inverter 9. On the other hand, in an isolated dual-inverter system, the second inverter is not directly connected to the AC power supply, so that the common mode noise flowing to the AC power supply tends to be low.

However, when the power converter 7 is connected to the second capacitor 8 as in the power conversion apparatus 54, this causes a path to be formed through which the common mode noise from the second inverter 9 propagates to the three-phase AC power supply 1. Furthermore, since the common mode noise from the fourth inverter 52 connected to the second capacitor 8 propagates through the power converter, the common mode noise flowing from the power converter 7 side to the three-phase AC power supply 1 increases more than that from the rectifier circuit 2 side. Therefore, by setting the noise attenuation rate of the second noise filter circuit 56 on the power converter 7 side higher than that of the first noise filter circuit 55 on the rectifier circuit 2 side, the common mode noise of the entire system can be effectively suppressed.

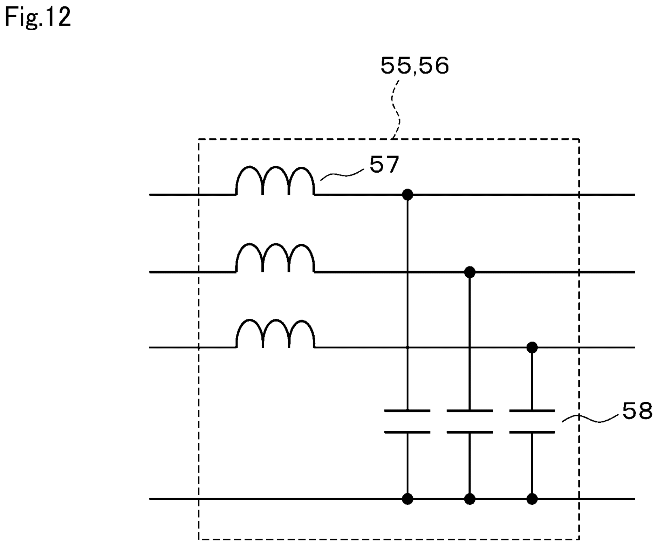

Figure 12 shows a configuration example of the first and second noise filter circuits 55, 56. The noise filter circuit for reducing common mode noise is composed of a common mode choke coil 57 inserted in all AC phases, and a Y capacitor 58 inserted from all AC phases to ground. In order to increase the noise attenuation rate, it is necessary to increase the component constants such as the inductance of the common mode choke coil 57 and the capacitance of the Y capacitor 58, or to connect multiple noise filter circuits in series, which would increase the size and cost of the entire power conversion apparatus.

In contrast, in the eighth embodiment, the power converter 7 is operated as an active filter circuit, and the power for driving the second motor 53 is supplied via the first motor 10. In this way, the current flowing through the power converter 7 is controlled only to compensate for the harmonics on the rectifier circuit 2 side, so that even if the noise attenuation rate of the second noise filter circuit 56 is increased, the rated current of the components can be kept small, and the increase in the size and cost of the entire power conversion apparatus 54 can be mitigated. Therefore, the rated current of the second noise filter circuit 56 is set smaller than the rated current of the first noise filter circuit 55.

Furthermore, according to the eighth embodiment, the power conversion apparatus 54 controls the first motor 10 that drives the compressor 22, and also controls the second motor 53 that drives the fan 31 of the outdoor unit 35. Therefore, the two motors 10 and 53 constituting the air conditioner 21 can be driven by the single power conversion apparatus 54.

Furthermore, when the power converter 7 is operated as a PWM rectifier that controls to boost the voltage across the second capacitor 8, the current flowing through the reactor 6 increases, so components with a large rated capacity must be selected. On the other hand, by operating the power converter 7 as an active filter circuit, it is possible to minimize the rated capacity of the semiconductor switch and the reactor 6 used in the power converter 7 by supplying the minimum necessary power.

### (Other Embodiments)

The semiconductor switch is not limited to an IGBT, and may be, for example, a power MOSFET.

The AC power supply may be single-phase.

When setting the magnitude relationship between the capacitances C1, C2 of the first and second capacitors to (C1<C2), it is not necessary to use a film capacitor for the first capacitor 4 and an electrolytic capacitor for the second capacitor 8.

The voltage across the second capacitor 8 may be controlled to rise using the first inverter 5 and the second inverter 9.

The configuration of the noise filter circuit is not limited to that shown in Figure 12.

The heat pump device is not limited to an air conditioner. In addition, the power conversion apparatus may be applied to devices other than heat pump devices.

Although several embodiments of the present invention have been described, these embodiments are presented as examples and are not intended to limit the scope of the invention. These novel embodiments can be implemented in various other forms, and various omissions, substitutions, and modifications can be made without departing from the gist of the invention. These embodiments and modifications thereof are included within the scope and gist of the invention, and are included in the scope of the invention and its equivalents described in the claims.

### References Signs List

In the drawings, 1 is a three-phase AC power supply, 2 is a three-phase reactor, 3 is a rectifier circuit, 4 and 43 are a first capacitor (first energy storage element), 5 is a first inverter (first power converter), 6 is a three-phase reactor, 7 is a power converter (third power converter), 8 is a second capacitor (second energy storage element), 9 is a second inverter (second power converter), 10 is a first motor, 20 is a control unit, 21 is an air conditioner, 22 is a compressor, 31 is a fan, 41, 42, 45, 47, 51, and 54 are power conversion apparatuses, 46, 48 are reactors, 52 is a fourth inverter (fourth power converter), 53 is a second motor, 55 is a first noise filter circuit, and 56 is a second noise filter circuit.

### Technical Field

Embodiments of the present invention relate to a power conversion device that drives a motor having an open winding wire structure, and a heat pump device that includes the power conversion device.

### Background Art

Conventionally, there has been known a power conversion device in which a large-capacitance capacitor for direct-current smoothing has been changed to a small-capacitance capacitor for the purpose of the reduction in the size of passive components and the increase in the life of a device. For example, Patent Literature 1 discloses a configuration in which a regeneration absorption circuit in which a diode, a resistor, and a capacitor are connected in series is connected in parallel to a small-capacitance smoothing capacitor in which the maximum of a pulsing voltage is more than twice the minimum thereof, at a direct-current portion of a power conversion device that is connected to a single-phase alternating-current power source. In this configuration, the capacitance of the capacitor at the direct-current portion can be reduced, but the capacitance of the capacitor for regenerative energy absorption needs to be large to some extent for absorbing regenerative energy. When the capacitance of the capacitor is large, components may be damaged by inrush current at power-on, and therefore, an inrush prevention circuit needs to be separately provided. There are problems about the size reduction and cost reduction for a system.

Further, Patent Literature 1 describes that it is possible to reduce harmonics of an input current and improve a power factor in a single-phase input power conversion device equipped with a film capacitor having a small capacitance. However, in a three-phase input power conversion device, current flows only from a maximal phase to a minimal phase in three-phase alternating current, and therefore, the input current cannot be controlled to a sine wave simply by the switching in a power conversion circuit for motor drive.

Meanwhile, for example, as shown in Patent Literature 2, there is known a dual inverter system in which an open winding wire motor having an independent winding wire for each phase is driven by two inverters, for realizing the increase in the capacity of the device and the increase in the speed of the motor. In this dual inverter system also, the capacitor having a small capacitance can be used at the direct-current portion, but eventually, the inrush prevention circuit needs to be separately provided for the capacitor for regenerative energy absorption that requires a certain degree of capacitance. Furthermore, in the case of the connection to polyphase alternating current such as three-phase alternating current, the input current of the device cannot be controlled to a sine wave.

In contrast, Patent Literature 3 discloses a system in which a matrix converter is applied to an inverter on a primary side.

### Citation List

### Patent Literature

Patent Literature 1: Japanese Patent No. 4391768
Patent Literature 2: Japanese Patent No. 7218131
Patent Literature 3: Japanese Patent No. 5531238

### Summary of Invention

### Technical Problem

In the configuration of Patent Literature 3, the three-phase input current can be controlled to a sine wave, but components having ratings equivalent to or more than the rated capacitance of the power conversion device need to be selected as a semiconductor device for the matrix converter, a choke coil to be used for an alternating-current filter, and the like. There are problems of the increase in the whole size of the power conversion device and the increase in cost.

Hence, a power conversion device that does not require the inrush prevention circuit to be separately provided in the dual inverter system and that can suppress the increase in the whole size of the device and the increase in cost with high efficiency, and a heat pump device that includes the power conversion device are provided.

### Solution to Problem

A power conversion device in an embodiment includes: a rectifier circuit that rectifies an alternating-current voltage supplied from an alternating-current power source; a first capacitor that is connected to a direct-current side of the rectifier circuit; a first power converter that is connected to the first capacitor in parallel and that is constituted by a diode and a semiconductor switch, one ends of phase winding wires of a motor being connected to phase output terminals of the first power converter, the winding wires being independent; a second power converter that is constituted by a diode and a semiconductor switch, the other ends of the winding wires of the motor being connected to phase output terminals of the second power converter; a second capacitor that is connected to a direct-current side of the second power converter; a reactor that is connected so as to branch from a wire that connects the alternating-current power source and the rectifier circuit; a third power converter that is connected between the reactor and the second capacitor, that is constituted by a diode and a semiconductor switch, and that suppresses harmonics; a relay that is inserted between the alternating-current power source and the third power converter; and a control unit that drives the first and second power converters and charges the second capacitor before activation of the motor is started and that turns on the relay after the charge, in which an capacitance of the second capacitor is set so as to be larger than an capacitance of the first capacitor.

Further, a heat pump device in an embodiment includes: the power conversion device in the embodiment; and the motor, in which the motor drives a compressor.

### Brief Description of Drawings

[Figure 1] Figure 1 is a diagram showing the configuration of a power conversion device in a first embodiment.
[Figure 2] Figure 2 is a diagram showing the configuration of an air conditioner.
[Figure 3] Figure 3 is a flowchart showing a processing content from power-on to activation of a motor.
[Figure 4] Figure 4 is a timing chart showing a current and voltage waveforms corresponding to the processing content shown in Figure 3.
[Figure 5] Figure 5 is a diagram showing the configuration of a power conversion device in a second embodiment.
[Figure 6] Figure 6 is a flowchart showing a processing content of a regeneration absorption operation in a third embodiment.
[Figure 7] Figure 7 is a diagram showing the switching state of each inverter when the regeneration absorption operation is performed.
[Figure 8] Figure 8 is a timing chart showing currents and voltage waveforms corresponding to the processing content shown in Figure 6.
[Figure 9] Figure 9 is a diagram showing the switching state of each inverter when the regeneration absorption operation is performed in a fourth embodiment.
[Figure 10] Figure 10 is a diagram showing the configuration of a power conversion device in a fifth embodiment.

### Description of Embodiments

### (First Embodiment)

As shown in Figure 1, a power conversion device 41 in an embodiment adopts a motor 10 as a drive object. Although a three-phase permanent magnet synchronous motor, an induction machine, or the like is possible, the motor 10 is a permanent magnet synchronous motor in the embodiment. The motor 10 is a so-called open winding wire motor, three-phase winding wires thereof are not connected to each other, and both terminals of each wire are in an open state. That is, the motor 10 includes six winding wire terminals Ua, Va, Wa, Ub, Vb, Wb.

The motor 10 is driven by a dual inverter system with a first inverter 5 and a second inverter 9. The first inverter 5 and the second inverter 9 have an identical circuit configuration, and are three-phase inverters each of which includes three pairs of switching elements connected in series and in each of which each of three output terminals is an intermediate connection point between the switching elements connected in series. The phase output terminals of the first inverter 5 are connected to the winding wire terminals Ua, Va, Wa of the motor 10 respectively, and the phase output terminals of the second inverter 9 are connected to the winding wire terminals Ub, Vb, Wb of the motor 10 respectively.

A rectifier circuit 3 is connected to a three-phase alternating-current power source 1 that is a power source of the power conversion device 41, through a three-phase reactor 2 of the power conversion device 41. The rectifier circuit 3 is configured by the three-phase bridge connection of six diodes. To an output terminal of the rectifier circuit 3, a first capacitor 4 that is a film capacitor having a small capacitance and the first inverter 5 are connected.

To the second inverter 9, for example, a second capacitor 8 that is an electrolytic capacitor and both end portions on a direct-current side of a power converter 7 are connected in parallel. A high-voltage-side terminal and a low-voltage-side terminal of the first inverter 5, that is, both ends of the first capacitor 4 are not connected to the second inverter 9, and the second inverter 9 is independent. That is, between the first inverter 5 and the second inverter 9, respective output terminals are connected only through the independent phase winding wires of the motor 10.

Phase output terminals of the power converter 7 are connected to the three-phase alternating-current power source 1 through the three-phase reactor 6 and the relay 16. The first inverter 5, the second inverter 9, and the power converter 7 each are configured by the three-phase bridge connection of semiconductor switching elements to each of which a flywheel diode is connected in parallel, as exemplified by IGBTs, and correspond to first to third power converters respectively. The connection position of the relay 16 may be any of the interval between the three-phase alternating-current power source 1 and the three-phase reactor 6 and the interval between the three-phase reactor 6 and the power converter 7. The relay 16 is not provided with a current suppression element or the like in parallel, and is merely a three-phase relay that simultaneously opens and closes power source wires for the U-phase, the V-phase, and the W-phase. Meanwhile, a relay and an inrush current prevention circuit are not provided between the three-phase power source 1 and the rectifier circuit 3. That is, the relay 16 branches to the three-phase reactor 6, between the three-phase alternating-current power source 1 and the rectifier circuit 3, and is inserted into power source wires at a section to the power converter 7.

In the U-phase and V-phase of the power source wires that connect the three-phase alternating-current power source 1 and the three-phase reactor 2, current sensors 11U, 11V are disposed. Further, in the U-phase and V-phase of the power source wires that connect the three-phase alternating-current power source 1 and the three-phase reactor 6, current sensors 12U, 12V are disposed. Voltage sensors 13, 14 detect terminal voltages of the first capacitor 4 and the second capacitor 8 respectively. Between the phase output terminals of the first inverter 5 and the winding wire terminals Ua, Va, Wa of the motor 10, current sensors 15U, 15V, 15W are disposed.

Detection signals output by the above sensors 11 to 15 are input to a control unit 20. The control unit 20 is constituted by a microcomputer and the like, and controls the switching of each IGBT that constitutes the first inverter 5, the second inverter 9, and the power converter 7, based on the detection signals of the sensors 11 to 15. Further, the control unit 20 controls the opening and closing of the relay 16. The above constituents except the motor 10 constitute the power conversion device 41.

Further, the capacitance of the second capacitor 8 is set so as to be larger than the capacitance of the first capacitor 4. The film capacitor is used as the first capacitor 4 and the electrolytic capacitor is used as the second capacitor 8, but without needing to be limited to them, the above-described condition about the capacitances only needs to be met. For example, both capacitors may be electrolytic capacitors or film capacitors.

The first capacitor 4 may have such a capacitance that a high-frequency component that is generated by the switching of the first inverter 5 and the second inverter 9 can be cut, and that a current that charges the first capacitor 4 at power-on does not exceed the current withstand of the rectifier circuit 3, more specifically, the current withstand of a diode that is an element constituting the rectifier circuit 3. This capacitance is generally about several tens of µF. Thereby, the three-phase reactor 2 can be downsized.

By setting the first capacitor 4 to such a small capacitance, the inrush current to the first capacitor 4 that is generated at the power-on of the power conversion device 41 becomes an acceptable level, and the inrush current prevention circuit becomes unnecessary. Generally, the inrush current prevention circuit is constituted by a three-phase relay or single-phase relay for large current that is inserted in series with a power source wire and a PTC thermistor that is connected in parallel to the relay. Before power-on, the relay is opened, and after power-on, only a current restricted through the PTC thermistor flows and gradually charges the capacitor. The voltage of the capacitor rises, and at the time point when a large inrush current becomes unable to flow, the relay is closed. As a result, an excessively large inrush current does not flow into the rectifier circuit or the like, and the circuit can protect the device.

On the other hand, the capacitance of the second capacitor 8 may be determined based on the compensation capacitance of the power converter 7, the output power of the second inverter 9, the ripple current that flows into the second capacitor 8, and the like. This capacitance is generally about several hundreds of µF to several thousands of µF. Since the second capacitor 8 has a certain degree of large capacitance, there is a possibility that the inrush current flows in through a rectifier circuit portion of the power converter 7 at power-on. Hence, by a later-described circuit and control, the generation of the inrush current is prevented, so that the inrush current prevention circuit is unnecessary also for the second capacitor 8. As a result, the inrush current prevention circuit is unnecessary as the whole of the power conversion device 41.

Figure 2 shows the configuration of an air conditioner that is a heat pump device to which the power conversion device 41 is applied. As the heat pump device to which the power conversion device 41 is applied, other than the air conditioner, there are a hot water generation device that serves as a water heater, a cold and hot water generation device such as a chiller, and the like. The air conditioner 21 is constituted by an indoor unit 24, an outdoor unit 35, and refrigerant pipes and signal communication wires that connect the indoor unit 24 and the outdoor unit 35. The indoor unit 24 that is installed indoors houses an indoor-side heat exchanger 27 and an indoor fan 30 in the interior. On the other hand, the outdoor unit 35 is disposed outdoors, and houses the control unit 20, a compressor 22, an outdoor-side heat exchanger 29, a four-way valve 26, a decompression device 28, an outdoor fan 31, an outdoor fan motor 53, and the like.

The compressor 22 is configured to house a compression unit 23 and a motor 10 in an identical iron closed container 25, and a rotor shaft of the motor 10 is coupled to the compression unit 23. Moreover, the compressor 22, the four-way valve 26, the indoor-side heat exchanger 27, the decompression device 28, and the outdoor-side heat exchanger 29 are connected such that a closed loop is configured by pipes as refrigerant passages. The compressor 22 is a rotary compressor with one cylinder, for example, but without being limited to this, a rotary-type compressor with multiple cylinders, a scroll-type compressor, or a reciprocation-type compressor can be also used.

At the time of air heating, the four-way valve 26 is in a state shown by solid lines, a high-temperature refrigerant compressed by the compression unit 23 of the compressor 22 is supplied from the four-way valve 26 to the indoor-side heat exchanger 27, is condensed, releases heat indoors, and heats indoor air. Thereafter, the refrigerant is decompressed by the decompression device 28, flows to the outdoor-side heat exchanger 29 at a low temperature, vaporizes by absorbing heat from the external air, and returns to the compressor 22.

On the other hand, at the time of air cooling, the four-way valve 26 is switched to a state shown by broken lines. Therefore, the high-temperature refrigerant compressed by the compression unit 23 of the compressor 22 is supplied from the four-way valve 26 to the outdoor-side heat exchanger 29, releases heat outdoors, and is condensed. Thereafter, the refrigerant is decompressed by the decompression device 28, flows to the indoor-side heat exchanger 27 at a low temperature, vaporizes by absorbing heat from the indoor air, cools the indoor air, and returns to the compressor 22. Moreover, to the heat exchangers 27, 29 on the indoor side and the outdoor side, air blowing is performed by the indoor fan 30 and the outdoor fan 31 respectively, and by the air blowing, the heat exchange between the heat exchangers 27, 28 and the indoor and outdoor airs is efficiently performed.

Next, the operation of the embodiment will be described. The control unit 20 that controls the whole of the power conversion device 41 is provided. For example, the control unit 20 performs the operation/stop of the compressor 22, that is, the motor 10, based on an instruction from an unillustrated indoor-side control unit on the indoor unit 24 side. During the operation of the compressor 22, the control unit 20 performs vector arithmetic using the current values detected by the current sensors 15U, 15V, 15W and the terminal voltages of the first capacitor 4 and the second capacitor 8 detected by the voltage sensors 13, 14. Based on the arithmetic result, the control unit 20 coordinates and operates the switching elements of the first inverter 5 and the second inverter 9, and performs variable speed drive to the motor 10 by causing a desired current to flow through each winding wire of the motor 10.

Furthermore, during the operation of the motor 10, the control unit 20 causes the power converter 7 to operate as an active filter circuit, so as to suppress and reduce the harmonics that flows through the power source wire. The control unit 20 extracts harmonic currents from currents that flow in the phases of the reactor 2 and that are detected by the current sensors 11U, 11V, and controls the operation of the switching elements of the power converter 7 such that reactor currents in the phases detected by the current sensors 12U, 12V become correction currents for cancelling harmonic currents that flow in the U-phase, the V-phase, and the W-phase, in consideration of the terminal voltage of the second capacitor 8. By the active filter circuit operation of the power converter 7, power source harmonics can be suppressed, and the current that flows from the rectifier circuit 3 to the alternating-current power source 1 side can approximate a sine wave.

The second capacitor 8 is used as a power source for the correction currents when the power converter 7 functions as the active filter circuit, and therefore, has a certain degree of capacitance. Moreover, when the power converter 7 operates as the active filter circuit, a power source having such a high voltage that the harmonics can be compensated is necessary. Therefore, it is desirable that the terminal voltage of the second capacitor 8 that is the power source at the time of the active filter circuit operation is kept at a predetermined value or more. Hence, during the active filter circuit operation, in parallel, the control unit 20 may control the on-state and off-state of the switching elements of the power converter 7 such that the terminal voltage of the second capacitor 8 is kept at a certain value or more. Further, when the motor 10 is in a state where the generation amount of the harmonic current is very small, as exemplified by a low-load state, the control unit 20 may detect that, stop the power converter 7, and stop the active filter circuit operation, to lessen the switching loss of the switching elements of the power converter 7.

By configuring the power conversion device 41 as described above, the controllability of the motor that uses the dual inverter constituted by the first inverter 5 and the second inverter 9 and the motor 10 having the open winding wire configuration is enhanced. The power source harmonics can be suppressed by causing the power converter 7 to operate as the active filter circuit by performing the switching control such that the current that flows from the rectifier circuit 3 to the alternating-current power source 1 side approximates a sine wave. That is, since the voltage is applied to the winding wire of the motor 10 by the two inverters 5, 9, it is possible to expand the operation range of the motor 10. Further, since the voltage to be applied to the winding wire of the motor 10 has multiple levels, it is possible to reduce the iron loss that is generated in the motor 10.

Furthermore, by devising the drive method for the two inverters 5, 9 by the control unit 20, it is possible to perform such a control that the power to be applied to the motor 10 is constant, and to expand an operation range in a high-speed region by reactive power injection. Further, by connecting a direct-current portion negative electrode side of the power converter 7 and a direct-current portion negative electrode side of the second inverter 9, a common reference voltage is adopted as reference voltages for the circuits. Thereby, it is possible to decrease insulation spots in the drive power source, and to prevent the increase in circuit size and the increase in cost.

A control by which the inrush current prevention circuit at the power-on of the power conversion device 41 becomes unnecessary will be described with reference to Figure 3 and Figure 4. The time of the power-on of the power conversion device 41 can include the time of wire connection for installation, the time when an unillustrated breaker provided between the three-phase alternating-current power source 1 and the power conversion device 41 is powered on from a release state, and the time of the recovery of the three-phase alternating-current power source 1 from electric outage. In the initial state of the power conversion device 41, the relay 16 is in the off-state at the time of the non-connection of the three-phase alternating-current power source 1, that is, at the time of non-power-on.

When the alternating-current power source is powered on from the three-phase alternating-current power source 1 to the power conversion device 41, the first capacitor 4 is charged through the rectifier circuit 3 (S1). When the terminal voltage of the first capacitor 4 has exceeded a threshold (YES in S2), the control unit 20 starts the switching of the first and second inverters 5, 9 (S3). On this occasion, a switching pattern in which the direct-current energization of the motor 10 is performed is adopted. The direct-current energization is generally an energization that is used for rotor positioning before the activation of the motor 10, and is an energization in which only a particular phase in the motor 10 is energized and a rotating magnetic field is not made. In an energization pattern for the direct-current energization, the motor 10 does not rotate. In a switching pattern for the direct-current energization on this occasion, a PWM duty ratio is previously adjusted such that a large current does not flow into the second capacitor 8. Thereby, the second capacitor 8 is gradually charged through the first and second inverters 5, 9 (S4), and a temporary and excessively large current does not flow through the rectifier circuit 3.

Subsequently, when the terminal voltage of the second capacitor 8 has exceeded a threshold (YES in S5), the control unit 20 turns on the relay 16 (S6). At this time point, the both-end voltage of the second capacitor 8 has already risen to a sufficiently high voltage, and therefore, a large current does not flow to a rectification portion of the power converter 7 even when the relay 16 is turned on. Then, the drive control of the motor 10 is started (S7).

The threshold for the terminal voltage of the second capacitor 8 in step S5 may be set to a value roughly equivalent to a value resulting from rectifying the alternating-current power source voltage, or such a threshold level that an excessively large inrush current does not flow into the second capacitor 8 even at power-on may be previously confirmed by experiments or the like, and may be set. The charges of the capacitors in steps S1 and S4 are naturally performed and are not actively controlled by the control unit 20, but are described in the flowchart for facilitating understanding of the explanation of the operation.

As described above, when the relay 16 is in the off-state at power-on, only the first capacitor 4 having a relatively small capacitance is charged. Since the first capacitor 4 has a small capacitance, the inrush current that is generated at the time of the charge does not become such a large current that the current exceeds the current withstand of an element constituting the rectifier circuit 3 and destroys the element. When the first capacitor 4 has been charged to some extent, the second capacitor 8 is gradually charged through the open winding wire motor 10 and the first capacitor 4, by the direct-current energization drive of the first and second inverters 5, 9. On this occasion, by the switching patterns of the first and second inverters 5, 9, the charge current of the second capacitor 8 is controlled so as not to become excessively large.

Thereafter, the relay 16 is turned on at the timing when the both-end voltage of the second capacitor 8 has become roughly equivalent to the value resulting from rectifying the alternating-current power source voltage, and thereby, the second capacitor 8 having a relatively large capacitance can transition to a steady operation while an excessively large charge current does not flow from the power converter 7 side. Accordingly, the embodiment makes it possible to safely perform the transition from the power-on to the steady operation without providing a protection circuit such as the inrush current prevention circuit.

Further, the relay 16 is provided in the middle of the wires through which power is supplied only to the third power converter 7 that operates as the active filter circuit and the second capacitor 8, and therefore, only a smaller current than the current that flows through the reactor 2 for the drive of the motor by the first and second inverters 5, 9 flows. Accordingly, it is possible to use a relay having a small size and a low rated current value, and to contribute to the reduction in the size of the device.

### (Second Embodiment)

Hereinafter, identical portions to the first embodiment are denoted by identical reference characters, for omitting descriptions, and different portions are described. In the drawings for power conversion devices of embodiments shown hereinafter, the illustration of the sensors 11 to 15 and the control unit 20 is omitted. In a power conversion device 42 in a second embodiment shown in Figure 5, a third capacitor 17 is connected to the direct-current portion of the power converter 7 that operates as the active filter circuit. A negative electrode terminal of the second capacitor 8 and a negative electrode terminal of the third capacitor 17 are commonly connected. An anode of a diode 18 is connected to a positive electrode terminal of the second capacitor 8, and a cathode is connected to a positive electrode terminal of the third capacitor 17.

In the second embodiment configured as described above, by connecting the direct-current portion negative electrode side of the power converter 7 and the direct-current portion negative electrode side of the second inverter 9 and inserting the diode 18 between the second capacitor 8 and the positive electrode terminal of the third capacitor 17, the regenerative energy generated at the time of the stop of the motor 10 can be absorbed also by the third capacitor 17. Accordingly, the capacitances of the first and second capacitors 4, 8 can be reduced.

### (Third Embodiment)

A third embodiment shows an example of a regeneration absorption operation in the power conversion device 41 or 42. Figure 6 is an operation flow at the time of the regeneration absorption, and Figure 7 shows only elements that are energized in the first inverter 5 and the second inverter 9 when the regeneration absorption operation is performed. During the execution of ordinary operation (S11), when the both-end voltage of the first capacitor 4 or the like has exceeded a previously determined threshold (YES in S12), the control unit 20 judges that the regeneration by the motor 10 has occurred, and performs the regeneration absorption operation shown in Figure 5 (S13).

Further, at this time, the switching control of the power converter 7 is performed, and the both-end voltage of C2; the second capacitor 8 is controlled (S14). Namely, the power converter 7 operates as a power regeneration PWM rectifier. That is, the switching control of the power converter 7 is performed, and the regenerative power is returned to the three-phase alternating-current power source 1 side, such that the both-end voltage of the second capacitor 8 that absorbs the regenerative power of the motor 10 becomes a predetermined voltage lower than the rated voltage value of the element. At the time of the regeneration absorption operation, the first and second inverters 5, 9 do not perform the drive of the motor 10, and therefore no harmonics are generated. Therefore, the power converter 7 does not need to perform the suppression operation for harmonics, and there is no problem, even when the power converter 7 stops the active filter circuit operation and operates as the power regeneration PWM rectifier instead. Moreover, before the both-end voltage has not fallen below a threshold for a set time or more (NO in S15), the return to step S13 is performed, and the regeneration absorption operation is continued. When the both-end voltage has fallen below the threshold for the set time or more (YES in S15), the regeneration absorption operation and the switching control of the power converter 7 are stopped (S16).

In the regeneration absorption operation in step S13, a neutral point of the motor 10 is formed by turning on all IGBTs on an upper arm side and turning off all IGBTs on a lower arm side in the first inverter 5. At this time, power does not flow from the motor 10 into the first capacitor 4. On the other hand, the second inverter 9 becomes equivalent to the configuration of the rectifier circuit 3 by turning off all the IGBTs. Thereby, power flows from the motor 10 into the second capacitor 8. In this way, the regeneration absorption operation is performed at the time of the regeneration by the motor 10, and thereby, the regenerative power can be absorbed simply by the second capacitor 8 having a relatively large capacitance. By adjusting the capacitance of the second capacitor 8 to about several hundreds of µF to several thousands of µF, it is possible to prevent an overvoltage from being generated also at the time of regeneration.

Figure 8 shows currents and voltage waveforms at portions in the case where the flow shown in Figure 6 is executed. Although there are current waveforms in the three phases, the distinction of the three phases is not necessary here, and therefore, the waveforms are not separately shown. In the figure, "load current" is the current that flows through the three-phase reactor 2, and "input current" is the current that is input from the three-phase alternating-current power source 1 to the three-phase reactors 2, 6. "Power converter current" is the current that flows through the power converter 7, that is, the current that flows through the three-phase reactor 6. "Second capacitor voltage" is the terminal voltage of the second capacitor 8, and "switching voltage" is the collector-emitter voltage of the IGBT that constitutes the power converter 7.

In Figure 8, the regeneration by the motor 10 occurs, and when the unillustrated voltage of the first capacitor 4 has risen to the threshold, the regeneration absorption operation is started. When the regeneration absorption operation is started, the both-end voltage of the second capacitor 8 rises once, but in parallel, the power converter 7 operates as the power regeneration PWM rectifier. Therefore, the regenerative current having flowed into the second capacitor 8 is avoided from rising to an extremely large current, by the regeneration to the three-phase alternating-current power source 1. Thereafter, when the regeneration by the motor 10 ends, the both-end voltage of the second capacitor 8 decreases due to the power regeneration PWM rectifier operation by the power converter 7. Then, when the time during which the both-end voltage of the second capacitor 8 has fallen below the threshold has become the set time or more, the switching of the power converter 7 stops, and the regeneration absorption and the power regeneration operation end. As a result, the switching voltage is fixed at Vdc that is a direct-current voltage after the full-wave rectification and smoothing of the alternating current of the three-phase alternating-current power source 1, all of the load current, the input current, and the power converter current become "0", and the regeneration absorption operation ends. While the power converter 7 operates as the power regeneration PWM rectifier, a sine wave current that is synchronous with the voltage of the three-phase alternating-current power source 1 flows as the input current.

Further, in the end judgement for the regeneration absorption operation in step S15, the judgement of "YES" may be made in the case where the voltage of the second capacitor 8 shown in Figure 8 has become a stable state. Further, the actual time of the generation of the regenerative power is short, and therefore, the judgment about the end may be performed based on the lapse time from the start of the regeneration absorption operation. The threshold in step S15 does not always need to be set to the same value as the threshold in step S13.

### (Fourth Embodiment)

A fourth embodiment also shows an example of the regeneration absorption operation in the power conversion device 41 or 42. Figure 9 shows only elements that are energized in the first inverter 5 and the second inverter 9 when the regeneration absorption operation is performed, similarly to Figure 7. The difference from the third embodiment is that all the IGBTs on the upper arm side are turned off and all the IGBTs on the lower arm side are turned on in the first inverter 5. This case is effective in the case where the drive power source for the second inverter 9 is constituted by a bootstrap circuit, because the IGBTs on the lower arm side are in the on-state for a long time.

### (Fifth Embodiment)

A power conversion device 43 in a fifth embodiment shown in Figure 10 has a configuration in which the three-phase reactor 2 is excluded from the power conversion device 41 and a reactor 44 is inserted on the positive electrode side between the rectifier circuit 3 and the first capacitor 4. By inserting the reactor 44 into the direct-current portion in this way, the number of reactors that are used can be reduced compared to the case of the insertion into the alternating-current portion. Reactors that are inserted into the direct-current portion may be only on a line on a high-potential side as shown in Figure 10, or may be dispersedly disposed on both ends of the high-potential side line and a low-potential side line. In the case of this dispersed disposition, the inductance of each reactor needs to be only about half compared to the case of the insertion of only one reactor.

### (Other Embodiment)

The semiconductor switch is not limited to the IGBT, and for example, may be a power MOSFET or the like.

The alternating-current power source may have a single phase.

When the magnitude relation between the capacitances C1, C2 of the first and second capacitors is set to (C1 < C2), it is not always necessary that the first capacitor 4 is a film capacitor and the second capacitor 8 is an electrolytic capacitor. The second capacitor may be a super capacitor such as an electric accumulator, or an electrolytic double-layered capacitor.

In step S3 in Figure 3, the second capacitor 8 is charged by outputting the switching pattern in which the direct-current energization of the motor 10 is performed by the first and second inverters 5, 9, before the relay 16 is turned on. The energization pattern on this occasion is not limited to the switching pattern for the direct-current energization, and only needs to be a switching pattern that allows the second capacitor 8 to be gradually charged without rotating the motor 10 using the first and second inverters 5, 9.

The heat pump device is not limited to the air conditioner. Further, the power conversion device may be applied to other than the heat pump device.

Some embodiments of the present invention have been described. The embodiments have been presented as examples, and are not intended to limit the scope of the invention. These novel embodiments can be carried out in various other modes, and a variety of omissions, replacements, and alterations can be performed without departing from the gist of the invention. These embodiments and modifications thereof are included in the scope and gist of the invention, and are included in a scope equivalent to the invention described in the claims.

### Reference Signs List

In the drawings, reference numeral 1 denotes a three-phase alternating-current power source, reference numeral 2 denotes a three-phase reactor, reference numeral 3 denotes a rectifier circuit, reference numeral 4 denotes a first capacitor, reference numeral 5 denotes a first inverter (first power converter), reference numeral 6 denotes a three-phase reactor, reference numeral 7 denotes a power converter (third power converter), reference numeral 8 denotes a second capacitor, reference numeral 9 denotes a second inverter (second power converter), reference numeral 10 denotes a motor, reference numeral 16 denotes a relay, reference numeral 20 denotes a control unit, reference numeral 21 denotes an air conditioner, reference numeral 22 denotes a compressor, reference numeral 31 denotes a fan, reference numerals 41 to 43 denote power conversion devices, and reference numeral 44 denotes a reactor.

## Claims

**1.** A power conversion apparatus comprising:
a rectifier circuit that rectifies an AC voltage supplied from an AC power supply;
a first energy storage element connected to a DC side of the rectifier circuit;
a first power converter including a diode and a semiconductor switch connected in parallel to the first energy storage element, wherein one end of each phase winding of a first motor, the phase windings being independent of one another, is connected to each phase output terminal;
a second power converter including a diode and a semiconductor switch, wherein the other end of the phase winding of the first motor is connected to each phase output terminal;
a second energy storage element connected to a DC side of the second power converter;
a reactor connected by branching from wiring connecting the AC power supply and the rectifier circuit; and
a third power converter that includes a diode and a semiconductor switch connected between the reactor and the second energy storage element, and suppresses harmonics.

**2.** The power conversion apparatus according to claim 1, wherein a voltage across the second energy storage element is controlled by at least one of the first power converter and the second power converter, or the third power converter.

**3.** The power conversion apparatus according to claim 1, wherein a maximum amount of energy stored in the second energy storage element is set to be greater than a maximum amount of energy stored in the first energy storage element.

**4.** The power conversion apparatus according to claim 1, wherein the first energy storage element is a film capacitor, and the second energy storage element is an electrolytic capacitor.

**5.** The power conversion apparatus according to claim 3, comprising a control unit that performs a power absorption operation in which, during power regeneration by the first motor, the semiconductor switch of the second power converter is entirely turned off, and the semiconductor switch of the first power converter is turned on or off to short-circuit one of winding ends of the motor and cause the second energy storage element to absorb the regenerative power.

**6.** The power conversion apparatus according to claim 5, wherein the control unit performs the power absorption operation when detecting that a voltage across the first energy storage element exceeds a preset threshold.

**7.** The power conversion apparatus according to claim 6, wherein during the power absorption operation, the control unit causes the third power converter to perform a switching operation, and when detecting that a voltage across the second energy storage element falls below a preset threshold, the control unit stops the switching operation of the third power converter.

**8.** The power conversion apparatus according to claim 1, comprising a reactor inserted to both a positive side and a negative side between the rectifier circuit and the first power converter.

**9.** The power conversion apparatus according to claim 1, comprising a fourth power converter including a diode and a semiconductor switch and connected in parallel to the second energy storage element, wherein an AC output thereof drives a second motor.

**10.** The power conversion apparatus according to claim 9, comprising:
a first noise filter circuit inserted between the AC power supply and the rectifier circuit; and
a second noise filter circuit inserted between the AC power supply and the fourth power converter, wherein a noise attenuation rate is set higher than that of the first noise filter circuit.

**11.** The power conversion apparatus according to claim 10, wherein a rated current of the second noise filter is set smaller than a rated current of the first noise filter.

**12.** A heat pump device comprising:
the power conversion apparatus according to any one of claims 1 to 11; and
the first motor,
wherein the first motor drives a compressor.

**13.** A heat pump device comprising:
the power conversion apparatus according to any one of claims 9 to 11;
the first motor; and
the second motor,
wherein the first motor drives a compressor, and the second motor drives a blower.

**1.** A power conversion device comprising:
a rectifier circuit that rectifies alternating-current voltage supplied from an alternating-current power source;
a first capacitor that is connected to a direct-current side of the rectifier circuit;
a first power converter that is connected to the first capacitor in parallel and that is constituted by a diode and a semiconductor switch, one ends of phase winding wires of a motor being connected to phase output terminals of the first power converter, the winding wires being independent;
a second power converter that is constituted by a diode and a semiconductor switch, the other ends of the winding wires of the motor being connected to phase output terminals of the second power converter;
a second capacitor that is connected to a direct-current side of the second power converter;
a reactor that is connected so as to branch from a wire that connects the alternating-current power source and the rectifier circuit;
a third power converter that is connected between the reactor and the second capacitor, that is constituted by a diode and a semiconductor switch, and that suppresses harmonics;
a relay that is inserted between the alternating-current power source and the third power converter; and
a control unit that drives the first and second power converters and charges the second capacitor before activation of the motor is started and that turns on the relay after the charge, wherein
an capacitance of the second capacitor is set so as to be larger than an capacitance of the first capacitor.

**2.** The power conversion device according to claim 1, wherein the first capacitor is a film capacitor, and the second capacitor is an electrolytic capacitor.

**3.** The power conversion device according to claim 1, wherein the first capacitor has such a capacitance that a high-frequency component that is generated by switching of the first power converter and the second power converter can be cut, and that a current that charges the first capacitor at power-on does not exceed a current withstand of the rectifier circuit.

**4.** The power conversion device according to claim 1, wherein the control unit causes the third power converter to operate as an active filter circuit.

**5.** The power conversion device according to claim 1, comprising a third capacitor that is connected to a direct-current portion of the third power converter, wherein
a negative electrode terminal of the second capacitor and a negative electrode terminal of the third capacitor are commonly connected, and
the power conversion device further comprises a diode in which an anode is connected to a positive electrode terminal side of the second capacitor and a cathode is connected to a positive electrode terminal side of the third capacitor.

**6.** The power conversion device according to claim 1, wherein when power is regenerated by the motor, the control unit performs a regeneration absorption operation of turning off all semiconductor switches of the second power converter, turning on or off the semiconductor switch of the first power converter, short-circuiting one of a winding wire ends of the motor, and causing the second capacitor to absorb the regenerative power.

**7.** The power conversion device according to claim 6, wherein when the control unit detects that a both-end voltage of the first capacitor has exceeded a previously determined threshold, the control unit performs the regeneration absorption operation.

**8.** The power conversion device according to claim 6, wherein when the control unit performs the regeneration absorption operation, the control unit causes the third power converter to operate as a power regeneration PWM rectifier that regenerates power to the alternating-current power source.

**9.** The power conversion device according to claim 1, comprising a reactor that is inserted between the alternating-current power source and the rectifier circuit.

**10.** The power conversion device according to claim 1, comprising a reactor that is inserted between the rectifier circuit and the first power converter.

**11.** A heat pump device comprising:
the power conversion device according to any one of claims 1 to 10; and
the motor, wherein
the motor drives a compressor.
